# EUROPEAN PATENT APPLICATION

(11) **EP 1 727 313 A1**
(43) Date of publication of application: **29.11.2006**
(21) Application number: 05011319.0
(22) Date of filing: 25.05.2005
(51) Int. Cl.: H04L 12/437

(54) **Ring network and method for automatic protection switching**

(71) Applicant: SIEMENS AKTIENGESELLSCHAFT, 80333 München (DE)
(72) Inventor: Ramalho Ribeiro dos Santos, Jose Miguel, 1170-329 Lisboa (PT); de Frias Rebelo Nunes, Pedro Ricardo, 2795-016 Linda-A-Velha (PT)
(74) Representative: Kley, Hansjörg

(57) **Abstract**

Known protection switching mechanisms for ring networks based on a redundancy manager, are in practice limited in performance due to a limited speed for deleting entries from the forwarding databases of the network nodes and due to a limited speed for learning a new topology to the forwarding database.
A method for Ethernet automatic protection switching is presented, by which a reduced number of entries in the forwarding databases are deleted.

## Description

This invention relates to a method for automatic protection switching in a ring network according to claim 1 and 9 and to a ring network for carrying out the claimed method according to claim 19.

A ring network provides the advantage of a network redundancy. In a common approach one network node operates as a redundancy manager. During regular operation the redundancy manager logically breaks the loop by blocking non-control frames, in order to prevent for example broadcasting messages to go around the loop endlessly, which might result in an overload of the network.

When a link between two nodes of the ring network fails, the redundancy manager uses the network redundancy in order to establish again a working network by admitting traffic through the redundancy manager. As a consequence, the forwarding databases in the nodes of the network must be adapted to the changed network topology.

In a more complex approach a ring network comprises more than one automatic protection switching domain. Typically frames are assigned to one of the automatic protection switching domains, e.g. by means of a code within the frame or by means of time slots assigned to the automatic protection switching domains. The ring network can then comprise several redundancy managers, whereas each redundancy manager blocks only non-control frames of one of the automatic protection switching domains.

In IETF, Network Working Groups, RFC 3619 "Ethernet Automatic Protection Switching (EAPS)" a technology for increasing the availability and robustness of ethernet rings is described. Each EAPS domain (ethernet automatic protection switching domain) has a single designated master node. In normal operation, the master node blocks one of its ring ports for all non-control Ethernet frames. When a ring fault occurs, the master node unblocks this port also for non-control Ethernet frames. The master node can learn of a ring fault by ring polling or by a link down alert of a node.

US 6,430,151 B1 discloses a network with redundancy properties and an associated method for detecting and eliminating errors in the network. A redundancy manager, which is connected to the line ends of the network, checks the status of the network by transmitting and receiving test telegrams. If there is an interruption in the network, the redundancy manager connects the line ends and thereby ensures continued network operation.

US 6,766,482 B1 discloses a method and an apparatus for automatic protection switching in a ring network by creating a protection domain having a control vlan and protected data vlans and designating a master node and transit nodes connected by a primary port and a secondary port. The master node blocks the secondary port for data vlan traffic until it detects a fault either by notice from a transit node or by polling. When a fault is detected, the master node unblocks the secondary port for data vlan traffic. Each time the secondary port is blocked and unblocked, the forwarding databases on all the nodes are flushed.

Known loop prevention techniques for ring networks and ring protection mechanisms based on a redundancy manager, may in practice be limited in performance due to the following two factors:
- Speed to delete entries from the forwarding databases of the nodes in case of a topology change, either by aging or flushing. While this takes place, traffic to the failed point is lost (black hole effect).
- Learning rate of new forwarding database entries: While learning is not performed for all flushed entries, the network performance is degraded because of unknown unicasts being forwarded in both directions of the ring. This degradation affects also traffic that is directed to unaffected ring portions.

So far this problem is addressed by forcing flush of the entire forwarding data base or by merely flushing all entries that directly lead to the ring topology, i.e. ring ports.

It is therefore the aim of the present invention to accelerate automatic protection switching. This aim is achieved by the measures described in claim 1 and/or claim 9 and/or claim 19.

Due to the steps of
- A): detection of a link failure at the first interface of a first one of the nodes;
- B): generating a first link down message by the first one of the nodes and sending said first link down message along the second direction of the ring network;
- C): upon receipt of the first link down message by the redundancy manager unblocking the redundancy manager for non-control frames of the automatic protection switching domain;
- D): upon generation or receipt of the first link down message by one of the nodes deleting only the entries in the forwarding database of said node which assign an address to the first interface of said node;
- E): updating deleted entries in the forwarding database of the node mentioned in step D),
automatic protection switching can be accelerated.

Since in case of a link failure, in the forwarding database of a node only entries are deleted which assign an address to the node's interface where a link down message entered or where a link failure was detected, only a part of the forwarding database needs to be deleted and updated. Especially the time consuming process of learning the new network topology can be accelerated.

When a failed link is repaired, another automatic protection switching method is necessary, in order to map the changed topology to a node's database and to set the network and the redundancy manager into a mode of normal operation. The logic of this method for automatic protection switching in case of a repairing of a failed link is similar to the method for automatic protection switching in case of a link error, but it requires some modified steps.

Due to the steps of
- K): detection of a repaired link at the first interface of a first one of the nodes;
- L): generating a first link up message by the first one of the nodes and sending said first link up message along the second direction of the ring network;
- M): upon receipt of the first link up message by the redundancy manager blocking the redundancy manager for non-control frames of the automatic protection switching domain;
- N): upon generation or receipt of the first link up message by one of the nodes deleting only the entries in the forwarding database of said node which assign an address to the second interface of said node;
- O): updating deleted entries in the forwarding database of the node mentioned in step N),
automatic protection switching can be accelerated.

Since in case of a repairing of a failed link, in the forwarding database of a node which received a link up message, only entries are deleted which assign an address to the ring interface by which the first link up message did not enter into the node, only a reduced part of the forwarding database needs to be deleted and updated. Especially the time consuming process of learning the new network topology can be accelerated this way.

Advantageous embodiments are described in the dependent claims.

By carrying out step D) and step E) for all nodes that have received or generated the first link down message and/or by carrying out step N) and step O) for all nodes that have received or generated the first link up message, automatic protection switching can be further accelerated, since even less entries in the forwarding databases of the nodes have to be deleted and updated.

By terminating the first link down message in the redundancy manager, automatic protection switching can be further accelerated, since the first link down message does not need to be forwarded along the whole ring network, Nodes that do not receive the first link down message can be informed about the link failure by other techniques, e.g. by polling or by a second link down message. The argumentation applies equivalently for the termination of the first link up message in the redundancy manager.

By carrying out the further steps of:
- F): detection of the link failure at the second interface of a second one of the nodes;
- G): generating a second link down message by the second one of the nodes and sending said second link down message along the first direction of the ring network;
- H): upon receipt of the second link down message by the redundancy manager unblocking the redundancy manager for non-control frames of the automatic protection switching domain;
- I): upon generation or receipt of the second link down message by one of the nodes deleting only the entries in the forwarding database of said node which assign an address to the second interface of said node;
- J): updating deleted entries in the forwarding database of the node mentioned in step I),
automatic protection switching can be additionally accelerated. Since, starting from the link where the link failure has occurred, link down messages are sent in both directions of the ring, nodes are informed about the link failure more rapidly.

By carrying out step I) and step J) for all nodes that have received or generated the second link down message, automatic protection switching can be further accelerated, since even less entries in the forwarding databases of the nodes have to be deleted and updated.

By terminating the second link down message in the redundancy manager, the first link down message and/or the second link down message do not need to be forwarded along the whole ring network.

On the other hand, by forwarding the first link down message and/or the second link down message by the redundancy manager, link failures that happen close to the redundancy manager, result in a quicker informing of nodes close to the redundancy manager, but on the opposite side of the redundancy manager to where the link failure has occurred. In order to inform a node on the opposite side of the redundancy manager of the passing through of a link down message, the link down message can be modified in the redundancy manager, e.g. by setting a mark to the link down message, or by creating a new modified link down message. This will instruct the node on the opposite side of the redundancy manager to delete only entries in its forwarding database, which assign an entry to the ring interface where the modified link down message has not entered the node. The equivalent argumentation applies for the first link up message and for the second link up message.

For a node which is adjacent to a failed link, upon detection of the link failure, updating of the forwarding database can be further accelerated by overwriting an entry which assigns an address to the interface which connects said node to the failed link with an entry which assigns an address to the interface facing the other direction of the ring. It is even more advantageous to perform this step for all entries of said node.

By carrying out the further steps of:
- P): detection of the repaired link at the second interface of a second one of the nodes;
- Q): generating a second link up message by the second one of the nodes and sending said second link up message along the first direction of the ring network;
- R): upon receipt of the second link up message by the redundancy manager blocking the redundancy manager for non-control frames of the automatic protection switching domain;
- S): upon generation or receipt of the second link up message by one of the nodes deleting only the entries in the forwarding database of said node which assign an address to the first interface of said node;
- T): updating deleted entries in the forwarding database of the node mentioned in step S),
automatic protection switching can be additionally accelerated. Since, starting from the repaired link, link up messages are sent in both directions of the ring, nodes are informed about the repairing of the link more rapidly.

By carrying out step S) and step T) for all nodes that have received or generated the second link up message, automatic protection switching can be further accelerated, since even less entries in the forwarding databases of the nodes have to be deleted and updated.

A ring network which comprises one automatic protection switching domain and one redundancy manager is comparatively easy and inexpensive to be configured, compared to ring networks comprising several redundancy managers. However, a ring network comprising more than one automatic protection switching domain and more than one redundancy manager has the advantage of being more flexible. When for example one of the automatic protection switching domains fails by being flooded, other automatic protection switching domains can still be operating normally.

A simple and reliable solution for blocking non-control frames of an automatic protection switching domain is the creation of a protection link adjacent to the first or second interface of the redundancy manager. The redundancy manager thereby prevents said non-control frames from entering the redundancy manager through the protection link or from being sent out through the protection link. In other words, the ring network has then on a higher layer than the physical layer the topology of a bus, with the redundancy manager being located at one end of said bus.

Updating of the forwarding database can be further accelerated as follows: Upon reception of the first link up message and/or the second link up message by the redundancy manager, an entry, in the redundancy manager's forwarding database, which assigns an address to the interface directly connected to the protection link , is overwritten with an entry which assigns said address to the redundancy manager's other interface of the ring network. If this is performed for all entries in the redundancy manager's forwarding database, which assigns an address to the interface directly connected to the protection link, the redundancy manager's database is updated in an extremely short time. In most ring networks the majority of the nodes have to update their forwarding databases with slower learning mechanisms, e.g. by analysing the source address of frames that enter said nodes. In the updating process of the forwarding databases of the whole ring network, the redundancy manager can then have a leading function, since its forwarding database is one of the first being completely updated. Consequently, frames being sent out from the redundancy manager are of the first ones being routed correctly.

The figures describe the state of the art and the invention based on examples:
Figure 1: Example of a ring network with nodes, one of the nodes being a redundancy manager
Figure 2: Illustration of a method for automatic protection switching according to the state of the art
Figure 3: Example of the invention in case of a link failure
Figure 4; Example of the invention in case of a repairing of a failed link

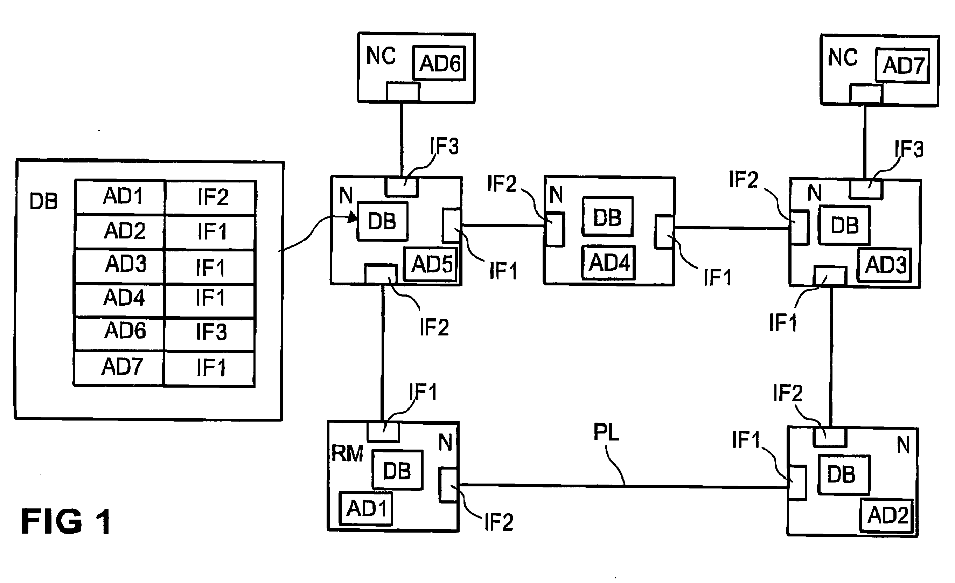

Figure 1 depicts an example of ring network during normal operation with a plurality of nodes N. Each node N of the ring network comprises an address AD1, AD2, AD3, AD4, AD5, a forwarding database DB, a first interface IF1 and a second interface IF2. Each of the nodes N of the ring network is arranged such that the first interface IF1 faces the first direction and the second interface IF2 faces the second direction of the ring network.

One of the nodes N is a redundancy manager RM which blocks non-control frames of a specific automatic protection switching domain. In this example the redundancy manager RM creates a protection link PL adjacent to its second interface IF2 by preventing non-control frames from entering through the second interface IF2 into the redundancy manager RM and by preventing non-control frames from being sent out through the redundancy manager's RM second interface IF2. Due to the protection link PL, the ring network has on a layer higher than the physical layer the topology of a bus network with the redundancy manager situated at one end of the bus network.

In the example depicted in figure 1 further network components NC, e.g. computers, comprising each an address AD6, AD7, are connected to other interfaces IF3 of some nodes. The ring network can also be interconnected to other networks.

As an example for a forwarding database DB, the forwarding database DB of the node N with the address AD5 is depicted in more detail. Said node N routes non-control frames comprising one address of a first plurality of destination addresses AD2, AD3, AD4, AD7 to said node's first interface IF1, since these frames could not be forwarded along the ring via the second interface IF2 of said node, due to the protection link PL. The forwarding database DB of said node therefore assigns said first plurality of addresses AD2, AD3, AD4, AD7 to the first interface IF1 of said node. Based on the same logic said forwarding database DB assigns a second plurality of addresses AD1 to the second interface IF2. Frames with a destination address AD6 of a network component NC which is not part of the ring, but which is connected to said node are routed via other interfaces IF3.

The databases of the other nodes N of the ring network have similar databases, of course with a different content, but following the same logic for assigning addresses AD to interfaces.

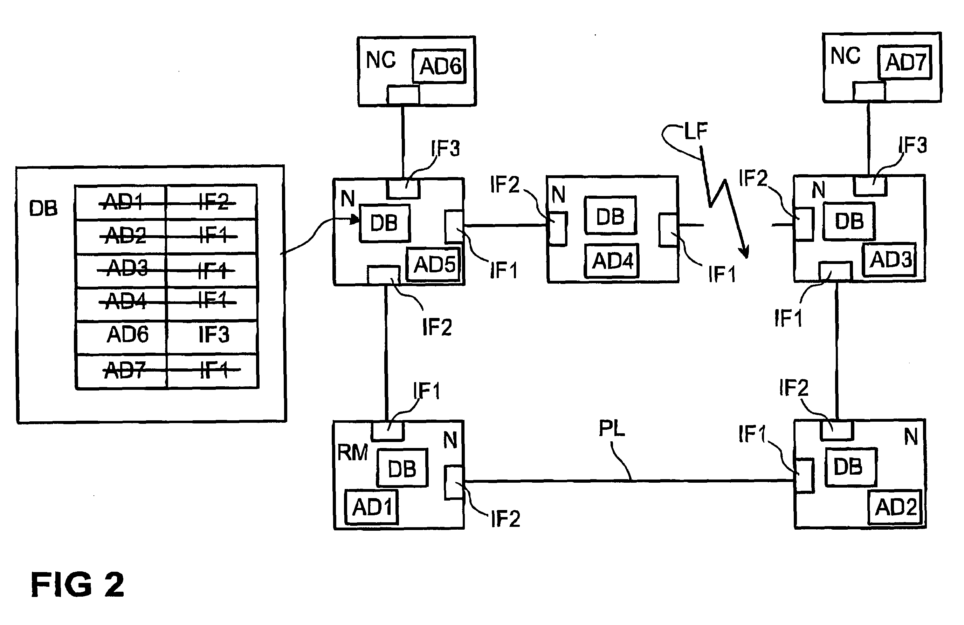

Figure 2 depicts an example of a method for automatic protection switching for the same ring network as in figure 1 in case of a failure between two nodes N according to the state of the art. The link failure can be communicated to the nodes N by polling or by a link down message MSG1, MSG2, which is sent out by the nodes N adjacent to the failed link. As soon as one of the nodes N of the ring network learns of a link failure LF, said node deletes at least all entries in its forwarding database DB which relate to the ring structure, thus all entries which assign an address to the first interface IF1 and all entries which assign an address to the second interface IF2.

As soon as the redundancy manager RM learns of the link failure, it opens the protection link PL also for non-control frames.

The forwarding databases DB of a node N is subsequently updated by known learning mechanisms. This can for example be performed in a way, that when a node N receives a frame via one of its interfaces IF1, IF2, an entry in the forwarding database is generated, the entry assigning said frame's source address to said interface IF1, IF2

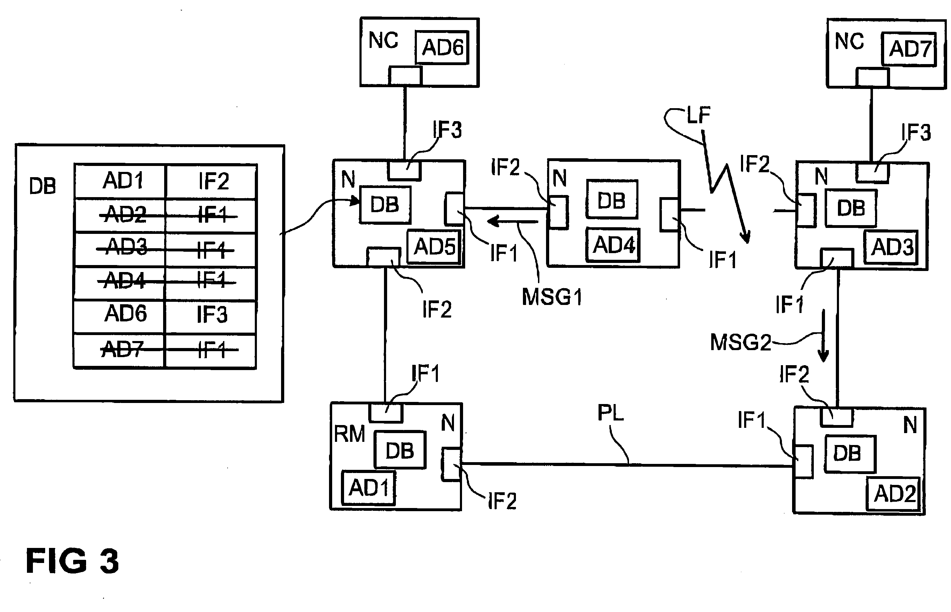

Figure 3 illustrates the invention in a first and in a second example for the same ring network as in figure 1 in case of a failure in the link adjacent to the first interface IF1 of the node N with an address AD4. In the first example, upon detection of the link failure LF, said node N sends out a first link down message MSG1 via its second interface IF2. The first link down message MSG1 is forwarded along the ring network until it reaches the node N with an address AD3, which is also adjacent to the link, where the link failure LF has occurred. This way all nodes are informed of the link failure LF, thus in this example only one link down message MSG1 is necessary.

Upon receipt of the first link down message MSG1, the node N with the address AD5 deletes only entries in its forwarding database, which assign an address AD2, AD3, AD4, AD7 to its first interface IF1. All other nodes N in the ring network delete all entries which assign an address to their first interface IF1 or to their second interface IF2. When the redundancy manager RM receives the first link down message MSG1, it unblocks the protection link PL for non-control frames. The nodes N then update deleted entries in their forwarding databases using known learning mechanisms.

In the second example of the invention, the first link down message MSG1, which is sent out by the node with the address AD 4, is terminated in the redundancy manager RM. All the nodes N, which have been in touch with the first link down message MSG1, delete only entries in their forwarding database DB, which assign an address to their first interface IF1.

Additionally, the node with the address AD3, which is also adjacent to the link where the failure LF occurred, detects the link failure LF in its second interface IF2 and sends out a second link down message MSG2 via its first interface IF1. The second link down message MSG2 is subsequently forwarded along the ring network and also terminated in the redundancy manager RM. All nodes N of the ring network, that have been in touch with the second link down message MSG2 delete only entries that assign an address to their second interface IF2. Upon receipt of the first link down message MSG1 or the second link down message MSG2, the redundancy manager RM unblocks the protection link PL for non-control frames. The nodes N then update deleted entries in their forwarding databases DB using known learning mechanisms.

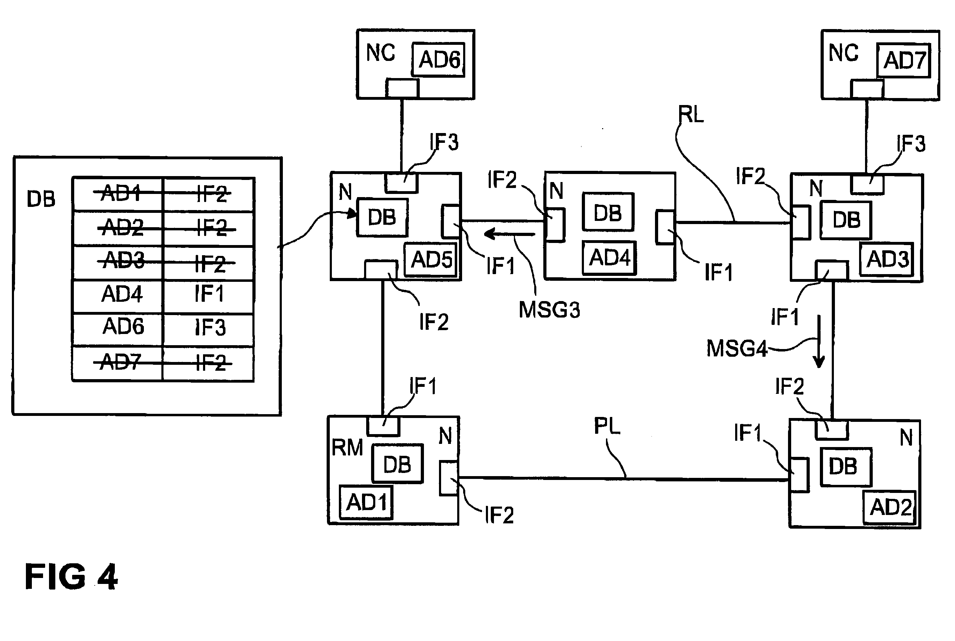

Figure 4 illustrates the invention in a third and a fourth example for the same ring network as in figure 1 in case of a repairing of the link adjacent to the first interface IF1 of the node N with the address AD4. In the third example, upon detection of the repairing of the link, said node N sends out a first link up message MSG3 via its second interface IF2. The first link up message MSG3 is forwarded along the ring network until it reaches the node N with the address AD3, which is also adjacent to the repaired link. This way all nodes are informed of the repairing of the link, thus in this example only one link up message MSG3 is necessary.

Upon receipt of the first link up message MSG3, the node N with the address AD5 deletes only entries in its forwarding database, which assign an address to its second interface IF2. All other nodes N in the ring network delete all entries which assign an address to their first interface IF1 or to their second interface IF2. When the redundancy manager RM receives the first link up message MSG3, it blocks the protection link for non-control frames. The nodes N then update deleted entries in their forwarding databases DB using known learning mechanisms.

In order to prevent frames to perform loops, a node N can be programmed to wait for a predetermined time, which is long enough to guarantee, that the redundancy manager RM has blocked the protection link for non-control frames. Alternatively, a node N can also wait for a special message from the redundancy manager RM, indicating that the protection link PL is blocked for non-control frames.

In the fourth example of the invention, the first link up message MSG3, which is sent out by the node with the address AD 4, is terminated in the redundancy manager RM. All the nodes N, which have been in touch with the first link up message MSG3, delete only entries in their forwarding database DB, which assign an address to their second interface IF2.

Additionally, the node N with the address AD3, which is also adjacent to the repaired link RL, detects the repairing of the link in its second interface IF2 and sends out a second link up MSG4 via its first interface IF1. The second link up message MSG4 is subsequently forwarded along the ring network and also terminated in the redundancy manager RM. All nodes N of the ring network, that have been in touch with the second link up message MSG4 delete only entries that assign an address to their first interface IF1. Upon receipt of the first link up message MSG3 or the second link up message MSG4, the redundancy manager RM blocks the protection link PL for non-control frames. The nodes N then update deleted entries in their forwarding databases DB using known learning mechanisms.

### List of reference signs

- AD1, AD2, AD3, AD4, AD5, AD6, AD7: addresses
- DB: forwarding database
- IF1: first interface
- IF2: second interface
- IF3: other interface
- LF: link failure
- MSG1: first link down message
- MSG2: second link down message
- MSG3: first link up message
- MSG4: second link up message
- N: node
- NC: network component
- PL: Protection Link
- RL: repaired link
- RM: redundancy manager

## Claims

1. Method for automatic protection switching in a ring network,
the ring network comprising at least one automatic protection switching domain and a plurality of nodes (N);
each of the nodes (N) comprising an address (AD1, AD2, AD3, AD4, AD5), a forwarding database (DB), a first interface (IF1) and a second interface (IF2);
each of the nodes (N) being arranged in the ring network such that the first interface (IF1) faces a first direction and
the second interface (IF2) faces the second direction of the ring network;
the forwarding database (DB) of each node (N) comprising a plurality of entries;
an entry of the forwarding database (DB) of a node (N) assigning an address (AD1, AD2, AD3, AD4, AD5, AD6, AD7) to one of the interfaces (IF1, IF2, IF3) of said node (N);
one of the nodes (N) being a redundancy manager (RM) blocking non-control frames of the at least one automatic protection switching domain during normal operation,
the method comprising the steps of
A) detection of a link failure (LF) at the first interface (IF1) of a first one of the nodes (N);
B) generating a first link down message (MSG1) by the first one of the nodes (N) and sending said first link down message (MSG1) along the second direction of the ring network;
C) upon receipt of the first link down message (MSG1) by the redundancy manager (RM), unblocking the redundancy manager (RM) for non-control frames of the at least one automatic protection switching domain;
D) upon generation or receipt of the first link down message (MSG1) by one of the nodes (N), deleting only the entries in the forwarding database (DB) of said node (N) which assign an address (AD1, AD2, AD3, AD4, AD5, AD6, AD7) to the first interface (IF1) of said node (N);
E) updating deleted entries in the forwarding database of the node (N) mentioned in step D).

2. The Method according to claim 1,
whereas step D) and step E) are carried out for all nodes (N) that have received or generated the first link down message (MSG1).

3. The method according to claim 1 or 2,
whereas the first link down message (MSG1) is terminated in the redundancy manager (RM) or modified in the redundancy manager (RM).

4. The method according to one of the preceding claims, whereas upon detection of a link failure (LF) at the first interface (IF1) of the first one of the nodes (N), an entry, in the forwarding database (DB) of the first one of the nodes (N), which assigns an address (AD1, AD2, AD3, AD4, AD5, AD6, AD7) to the first interface (IF1) of the first one of the nodes (N) is overwritten with an entry assigning said address (AD1, AD2, AD3, AD4, AD5, AD6, AD7) to the second interface (IF2) of the first one of the nodes (N).

5. The method according to one of the preceding claims, further comprising the steps of
F) detection of the link failure (LF) at the second interface (IF2) of a second one of the nodes (N);
G) generating a second link down message (MSG2) by the second one of the nodes (N) and sending said second link down message (MSG2) along the first direction of the ring network;
H) upon receipt of the second link down message (MSG1) by the redundancy manager (RM), unblocking the redundancy manager (RM) for non-control frames of the at least one automatic protection switching domain;
I) upon generation or receipt of the second link down message (MSG2) by one of the nodes (N), deleting only the entries in the forwarding database (DB) of said node (N) which assign an address (AD1, AD2, AD3, AD4, AD5, AD6, AD7) to the second interface (IF1) of said node (N);
J) updating deleted entries in the forwarding database of the node mentioned in step I).

6. The method according to claim 5,
whereas step I) and step J) are carried out for all nodes (N) that have received or generated the second link down message (MSG2).

7. The method according to claim 5 or 6,
whereas the second link down message (MSG2) is terminated in the redundancy manager (RM) or modified in the redundancy manager (RM).

8. The method according to claim 5, 6 or 7,
whereas upon detection of a link failure (LF) at the second interface (IF2) of the second one of the nodes (N), an entry, in the forwarding database (DB) of the second one of the nodes (N), which assigns an address (AD1, AD2, AD3, AD4, AD5, AD6, AD7) to the second interface (IF2) of the second one of the nodes (N), is overwritten with an entry assigning said address (AD1, AD2, AD3, AD4, AD5, AD6, AD7) to the first interface (IF1) of the second one of the nodes (N).

9. Method for automatic protection switching in a ring network,
the ring network comprising at least one automatic protection switching domain and a plurality of nodes (N);
each of the nodes (N) comprising an address (AD1, AD2, AD3, AD4, AD5), a forwarding database (DB), a first interface (IF1) and a second interface (IF2);
each of the nodes (N) being arranged in the ring network such that the first interface (IF1) faces a first direction and the second interface (IF2) faces the second direction of the ring network;
the forwarding database (DB) of each node (N) comprising a plurality of entries;
an entry of the forwarding database (DB) of a node (N) assigning an address (AD1, AD2, AD3, AD4, AD5, AD6, AD7) to one of the interfaces (IF1, IF2, IF3) of said node (N);
one of the nodes (N) being a redundancy manager (RM) blocking non-control frames of the at least one automatic protection switching domain during normal operation,
the ring network being in non-normal operation and the redundancy manager being unblocked for non-control frames of the at least one automatic protection switching domain,
the method comprising the steps of
K) detection of a repaired link RL at the first interface (IF1) of a first one of the nodes (N);
L) generating a first link up message (MSG3) by the first one of the nodes (N) and sending said first link up message (MSG3) along the second direction of the ring network;
M) upon receipt of the first link up message (MSG3) by the redundancy manager (RM) blocking the redundancy manager (RM) for non-control frames of the at least one automatic protection switching domain;
N) upon generation or receipt of the first link up message (MSG3) by one of the nodes (N) deleting only the entries in the forwarding database (DB) of said node (N) which assign an address (AD1, AD2, AD3, AD4, AD5, AD6, AD7) to the second interface (IF2) of said node (N);
O) updating deleted entries in the forwarding database of the node mentioned in step N).

10. The method according to claim 9,
whereas step N) and step O) are carried out for all nodes (N) that have received or generated the first link up (MSG3) message.

11. The method according to claim 9 or 10,
whereas the first link up message (MSG3) is terminated in the redundancy manager (RM) or modified in the redundancy manager (RM).

12. The method according to claim 9, 10 or 11, further comprising the steps of
P) detection of the repaired link (RL) at the second interface (IF2) of a second one of the nodes (N);
Q) generating a second link up message (MSG4) by the second one of the nodes (N) and sending said second link up message (MSG4) along the first direction of the ring network;
R) upon receipt of the second link up message (MSG4) by the redundancy manager (RM) blocking the redundancy manager (RM) for non-control frames of the at least one automatic protection switching domain;
S) upon generation or receipt of the second link up message (MSG4) by one of the nodes (N), deleting only the entries in the forwarding database (DB) of said node (N) which assign an address (AD1, AD2, AD3, AD4, AD5, AD6, AD7) to the first interface (IF1) of said node (N);
T) updating deleted entries in the forwarding database of the node N mentioned in step S).

13. The method according to claim 12,
whereas step S) and step T) are carried out for all nodes (N) that have received or generated the second link up (MSG4) message.

14. The method according to claim 12 or 13,
whereas the second link up message (MSG4) is terminated in the redundancy manager (RM) or modified in the redundancy manager (RM).

15. The method according to one of the preceding claims, whereas the ring network comprises one automatic protection
switching domain and one redundancy manager (RM).

16. The method according to one of the preceding claims,
whereas the redundancy manager (RM) blocks non-control frames during normal operation by creating a protection link (PL) directly connected to its first interface (IF1) or second interface (IF2).

17. The method according to claim 16,
whereas upon reception of the first link up message (MSG3) and/or the second link up message (MSG4) by the redundancy manager (RM), an entry, in the redundancy manager's (RM) forwarding database (DB), which assigns an address (AD1, AD2, AD3, AD4, AD5, AD6, AD7) to the interface (IF1, IF2) directly connected to the protection link (PL), is overwritten with an entry which assigns said address (AD1, AD2, AD3, AD4, AD5, AD6, AD7) to the redundancy manager's (RM) other interface (IF1, IF2) of the ring network.

18. The method according to one of the preceding claims,
whereas the redundancy manager (RM) blocks non-control frames by logically splitting itself up into two logical nodes.

19. A ring network for carrying out the method of one of the preceding claims.
